# EUROPEAN PATENT SPECIFICATION

(11) **EP 4 322 191 B1**
(45) Date of publication and mention of the grant of the patent: **25.03.2026**
(21) Application number: 23159195.9
(22) Date of filing: 28.02.2023
(51) Int. Cl.: H01G 4/012, H01G 4/008, H01G 4/12, H01G 4/30

(54) **CRACK RESISTANT MULTILAYERED CAPACITOR AND METHOD FOR MANUFACTURING THE SAME**
RISSFESTER MEHRSCHICHTKONDENSATOR UND VERFAHREN ZU DESSEN HERSTELLUNG
CONDENSATEUR MULTICOUCHE RÉSISTANT AUX FISSURES ET SON PROCÉDÉ DE FABRICATION

(30) Priority: 12.08.2022 KR 20220101047
(43) Date of publication of application: 14.02.2024
(73) Proprietor: Samsung Electro-Mechanics Co., Ltd., Suwon-si, Gyeonggi-do 16674 (KR)
(72) Inventor: Kim, Kyeongjun, 16674 Suwon-si, Gyeonggi-do (KR); Kim, Dongkyu, 16674 Suwon-si, Gyeonggi-do (KR); Kim, Mikyeong, 16674 Suwon-si, Gyeonggi-do (KR); Jeong, Hyungoo, 16674 Suwon-si, Gyeonggi-do (KR); Jun, Hoin, 16674 Suwon-si, Gyeonggi-do (KR)
(74) Representative: Grünecker Patent- und Rechtsanwälte PartG mbB

(56) References cited:
- JP-A- 2005 085 823
- JP-A- 2010 187 011
- JP-A- H09 260 198
- JP-A- S5 640 227
- JP-A- S5 990 916
- JP-U- S5 822 728
- KR-A- 20160 071 610
- US-A1- 2009 284 897
- US-A1- 2017 169 950

## Description

### CROSS-REFERENCE TO RELATED APPLICATION

This application claims priority to and the benefit of Korean Patent Application No. 10-2022-0101047 filed in the Korean Intellectual Property Office on August 12, 2022.

### TECHNICAL FIELD

This disclosure relates to a multilayered capacitor and a method for manufacturing the same.

### BACKGROUND

Multilayered capacitors are used in various electronic devices because they are small and have high capacity.

In particular, a high-voltage multilayered capacitor for an electric device for a vehicle is manufactured by applying a conductive paste onto a dielectric green sheet to form a printed film for an internal electrode and then, laminating the dielectric green sheet in several tens to hundreds of layers.

Herein, when a high voltage electric field is applied thereto, length expansion occurs in a thickness (T) direction (electric field direction), but length contraction occurs in a width (W) direction (reverse piezoelectric effect).

This phenomenon occurs because dipoles in a ferroelectric, for example, BaTiO₃, are aligned in one direction by the electric field, which is in a parallel direction to the electric field.

At this time, when a stress greater than a threshold value is applied to the multilayered capacitor, cracks may be generated. Therefore, it is necessary to suppress the occurrence of cracks due to such a piezoelectric phenomenon in the high-voltage multilayered capacitor for electric use.

JPS5990916A relates to a multilayer capacitor. The multilayer capacitor comprises a plurality of layers of electrode plates with through holes, each layer being interposed with a dielectric material, which is integrally bonded together via the through holes.

JPS5822728U relates to a multilayer ceramic capacitor obtained by superposing a plurality of ceramic green sheets each having an internal electrode pattern having an external electrode leadout portion formed on one surface thereof and firing the laminated ceramic green sheets, wherein the external electrode extraction portion is formed with a plurality of through holes so that the ceramic green sheets in contact with the upper and lower sides of each internal electrode pattern are integrated even in the through hole portions after firing.

US 2017/169950 A1 relates to a ceramic capacitor that includes first and second first internal electrodes respectively including first and second extended portions that respectively include a plurality of ceramic columns penetrating the first and the second extended portions, respectively, in a thickness direction. The first extended portion includes a first high ceramic-column density portion in which ceramic columns are provided at intervals of about 20 µm or less along the length direction of the extended portion. The second extended portion includes a second high ceramic-column density portion in which ceramic columns are provided at intervals of about 20 µm or less along the length direction of the extended portion.

JP 2005085823 A relates to a multilayer ceramic capacitor having a structure in which a plurality of internal electrode layers are laminated via ceramic layers.

JPH09260198A relates to a multilayer capacitor with improved reliability. The multilayer capacitor has an element body formed by alternately laminating flat internal electrodes having a predetermined area and dielectric layers, and a pair of external electrodes connecting the internal electrodes alternately in parallel at both ends of the element body, wherein the internal electrodes have at least one opening penetrating their planes, and the opening is filled with a dielectric material. In this multilayer capacitor, the dielectric layers above and below the internal electrodes are tightly adhered to each other at the openings of the internal electrodes by the dielectric material filled in the openings.

JPS5640227A relates to the production of a ceramic capacitor

KR 20160071610 A relates to a multi-layered ceramic capacitor which comprises: a ceramic main body having a plurality of dielectric layers stacked therein; first and second external electrodes formed in both sides of the ceramic main body; and a dummy electrode and an internal electrode separated from each other on the same dielectric layer of the ceramic main body, and electrically connected to the first external electrode or the second external electrode respectively by being exposed through both cross sections of the ceramic main body respectively. The internal electrode and the dummy electrode are alternately arranged when stacking the dielectric layer to form an overlap unit where the internal electrode and the dummy electrode are partially overlapped. The overlap unit further includes a vertically connected via to increase adhesion between the internal and external electrodes.

US 2009/284897 A1 relates to a collective component that has a first region that intersects a conductive paste film for external terminal electrodes in a break line in which break leading holes are arranged and a second region that does not intersect a conductive paste film for external terminal electrodes in the break line. The first break leading holes are formed in the first region so as not to reach the second region. The second break leading holes are formed only in the second region or from the second region to a portion of the first region. The pitch of the first break leading holes is wider than the pitch of the second break leading holes.

JP 2010187011 A discloses a laminate that includes laminated ceramic layers, internal electrodes, via hole conductors that are connected to the corresponding internal electrodes and extended from one main surface to another main surface so as to pierce all the ceramic layers. External electrodes are formed on the main surfaces of the laminate, the external electrodes being connected to the via hole conductors while covering the end surfaces of the via hole conductors. Concave portions are formed on the main surfaces of the laminate and at least part of the external electrodes in the thickness direction are located in the concave portions.

### SUMMARY

it is the object of the present invention to improve prior art systems. This object is solved by the subject matter of the independent claims. Preferred embodiments are defined by the dependent claims.

One aspect of the present disclosure may provide a multilayered capacitor capable of suppressing deformation and cracking due to a piezoelectric phenomenon by strengthening a bonding force between an internal electrode and a dielectric layer to reduce a piezoelectric behavior of the multilayered capacitor.

A multilayered capacitor according to claim 1 includes a capacitor body including a first dielectric layer, and a first internal electrode and a second internal electrode with the first dielectric layer interposed therebetween, and an external electrode on one surface of the capacitor body. The first internal electrode has a first through-portion penetrating the first internal electrode and a dielectric of the first dielectric layer is disposed in at least a portion of the first through-portion.

The first through-portion may be disposed in a region where the first internal electrode is not overlapped with the second internal electrode.

The second internal electrode may have a second through-portion penetrating the second internal electrode, and a dielectric of the first dielectric layer may be disposed in at least a portion of the second through-portion. The second through-portion may be disposed in a region where the second internal electrode is not overlapped with the first internal electrode.

The capacitor body may include an active region in which the first internal electrode and the second internal electrode are overlapped.

The capacitor body may include a first end region in which the first internal electrode is not overlapped with the second internal electrode.

The capacitor body may include a second end region in which the second internal electrode is not overlapped with the first internal electrode.

The first through-portion may be disposed in the first end region.

The second through-portion may be disposed in the second end region.

The first through-portion may not be disposed in the active region.

The second through-portion may not be disposed in the active region.

The first through-portion may extend in a thickness direction of the first internal electrode to connect the first dielectric layer, and a second dielectric layer, and the first internal electrode may be disposed between the first dielectric layer and the second dielectric layer.

The second through-portion may extend in a thickness direction of the second internal electrode to connect the first dielectric layer and a third dielectric layer, and the second internal electrode may be disposed between the first dielectric layer and the third dielectric layer.

The capacitor body may include a plurality of first internal electrodes, and dielectrics in the first through-portions of the plurality of first internal electrodes may be connected to each other to have a pillar shape extending in a stacking direction of the plurality of first internal electrodes.

The capacitor body may include a plurality of second internal electrodes, and dielectrics in the second through-portions of the plurality of second internal electrodes may be connected to each other to have a pillar shape extending in a stacking direction of the plurality of second internal electrodes.

The first internal electrode may include a plurality of first through-portions.

The second internal electrode may include a plurality of second through-portions.

The plurality of first through-portions may be spaced apart from each other in a width direction of the first internal electrode.

The plurality of second through-portions may be spaced apart from each other in a width direction of the second internal electrode.

In the longitudinal direction of the first internal electrode, an average length of the first through-portion may be smaller than an average length of the first end region.

In the longitudinal direction of the second internal electrode, an average length of the second through-portion may be smaller than an average length of the second end region.

In the width direction of the first internal electrode, a sum of average lengths of the plurality of first through-portions and average distances between the plurality of first through-portions may be less than an average length of the first end region.

In the width direction of the second internal electrode, a sum of the average lengths of the plurality of second through-portions and the average distances between the plurality of second through-portions may be less than am average length of the second end region.

According to another aspect, a method for manufacturing a multilayered capacitor according to claim 10 includes forming a first conductive paste layer having a first through-hole on a surface of a first dielectric green sheet, and a second conductive paste layer having a second through-hole on a surface of a second dielectric green sheet; preparing a dielectric green sheet laminate by laminating the first dielectric green sheet and the second dielectric green sheet so that the first through-hole is not overlapped with the second conductive paste layer, sintering the dielectric green sheet laminate to manufacture a capacitor body, and forming an external electrode on one surface of the capacitor body. The first dielectric green sheet, the second dielectric green sheet, or both are penetrated into the first through-hole.

In the manufacturing of the dielectric green sheet laminate, the first dielectric green sheet and the second dielectric green sheet may be laminated so that the second through-hole is not overlapped with the first conductive paste layer.

The first dielectric green sheet, the second dielectric green sheet, or both may be penetrated into the second through-hole.

In the manufacturing of the dielectric green sheet laminate, the first dielectric green sheet and the second dielectric green sheet may be laminated so that the first conductive paste layer and the second conductive paste layer are at least partially overlapped.

The method of manufacturing the multilayered capacitor may further include pressing the dielectric green sheet laminate.

In the manufacturing of the dielectric green sheet laminate, the pressing of the dielectric green sheet laminate, or both, the first dielectric green sheet, the second dielectric green sheet, or both may be penetrated into the first through-hole.

In the manufacturing of the dielectric green sheet laminate, the pressing of the dielectric green sheet laminate, or both, the first dielectric green sheet, the second dielectric green sheet, or both may be penetrated into the second through-hole.

The method of manufacturing the multilayered capacitor may further include cutting the dielectric green sheet laminate so that one end of the first internal electrode is exposed to one side of the dielectric green sheet laminate.

The cutting of the dielectric green sheet laminate may include cutting the dielectric green sheet laminate so that one end of the second internal electrode is exposed to the other side of the dielectric green sheet laminate.

According to the multilayered capacitor according to one aspect, by strengthening the bonding force between the internal electrode and the dielectric layer to reduce the piezoelectric behavior of the multilayered capacitor, deformation and cracks due to the piezoelectric phenomenon can be suppressed.

### BRIEF DESCRIPTION OF THE DRAWINGS

FIG. 1 is a perspective view illustrating a multilayered capacitor according to an embodiment.
FIG. 2 is a cross-sectional view of the multilayered capacitor taken along line I-I' of FIG. 1.
FIG. 3 is an exploded perspective view illustrating a laminate structure of internal electrodes in the capacitor body of FIG. 1.
FIG. 4 is a plan view illustrating another example of the internal electrodes of FIG. 3.
FIG. 5 is a photograph showing a cut surface in the X-Z direction of the multilayered capacitor manufactured in Example 1.
FIG. 6 is a photograph showing a cut surface in the X-Y direction of the multilayered capacitor manufactured in Example 1.
FIG. 7 is a photograph showing a cut surface in the X-Y direction of the multilayered capacitor manufactured in Example 2.
FIG. 8 is a graph showing piezoelectric curves of multilayered capacitors manufactured in Examples 1 and 2 and Comparative Examples 1 and 2.
FIG. 9 is a graph showing the insulation break-down voltage (BDV) of the multilayered capacitors manufactured in Examples 1 and 2 and Comparative Examples 1 and 2.

### DETAILED DESCRIPTION

The present disclosure will be described more fully hereinafter with reference to the accompanying drawings. The drawings and description are to be regarded as illustrative in nature and not restrictive. Like reference numerals designate like elements throughout the specification. Further, the accompanying drawings are provided only in order to allow embodiments disclosed in the present specification to be easily understood, and it is to be understood that the present disclosure includes all modifications, equivalents, and substitutions without departing from the scope of the present disclosure and the appended claims.

Terms including ordinal numbers such as first, second, and the like will be used only to describe various constituent elements, and are not to be interpreted as limiting these constituent elements. The terms are only used to differentiate one constituent element from other constituent elements.

It is to be understood that when one constituent element is referred to as being "connected" or "coupled" to another constituent element, it may be connected or coupled directly to the other constituent element or may be connected or coupled to the other constituent element with a further constituent element intervening therebetween. In contrast, it should be understood that, when it is described that an element is "directly coupled" or "directly connected" to another element, no element is present between the element and the other element.

Throughout the specification, it should be understood that the term "include," "comprise," "have," or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance. Unless explicitly described to the contrary, the word "comprise" and variations such as "comprises" or "comprising" will be understood to imply the inclusion of stated elements but not the exclusion of any other elements.

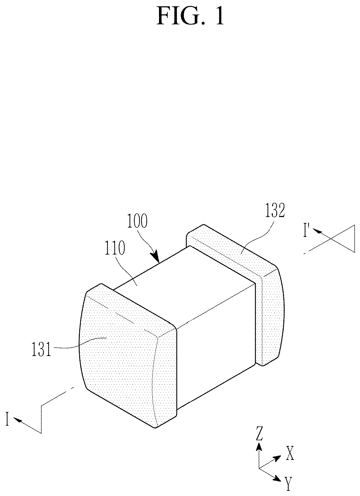

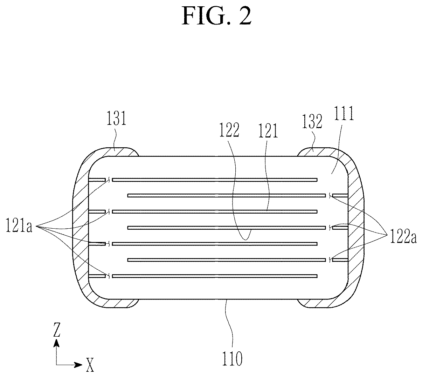

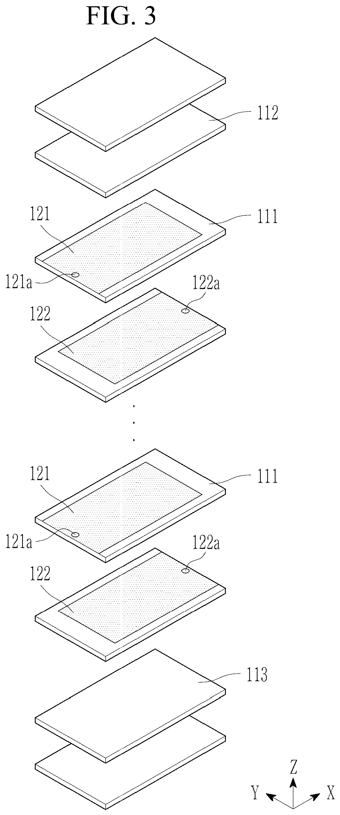

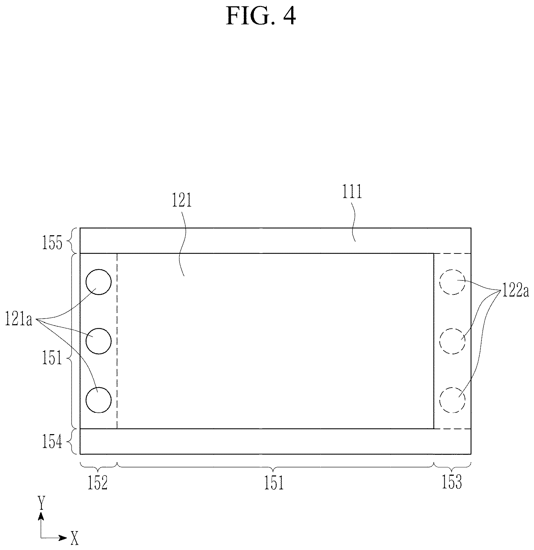

FIG. 1 is a perspective view illustrating a multilayered capacitor 100 according to an embodiment, FIG. 2 is a cross-sectional view of the multilayered capacitor 100 taken along line I-I' of FIG. 1, FIG. 3 is an exploded perspective view illustrating a laminate structure of the internal electrodes 121 and 122 in the multilayered capacitor 100 according to an embodiment, and FIG. 4 is a plan view illustrating another example of the internal electrodes 121 and 122 of FIG. 3.

In order to clearly describe the present embodiment, X, Y, and Z directions in the drawings are respectively defined as a length (L) direction, a width (W) direction, and a thickness (T) direction of a capacitor body 110. Herein, the thickness direction (Z direction) may be used in the same concept as a laminating direction in which dielectric layers 111 are laminated. The longitudinal direction (X direction) may be defined as an approximately perpendicular direction with respect to the thickness direction (Z direction), and the width direction (Y direction) may be defined as an approximately vertical direction with respect to the thickness direction (Z direction). In addition, the longitudinal direction (X direction) may indicate a direction having a length longer than the width direction (Y direction) among directions approximately perpendicular to the thickness direction (Z direction).

Referring to FIGS. 1 to 4, the multilayered capacitor 100 according to the present embodiment may include the capacitor body 110 and first and second external electrodes 131 and 132 disposed at both ends of the capacitor body 110 which face each other in the X direction.

The capacitor body 110 is formed by laminating a plurality of the dielectric layers 111 in the Z direction and then sintering them, and includes the plurality of dielectric layers 111 and a plurality of first and second internal electrodes 121 and 122 alternately interposed therebetween in the Z direction. Herein, the first and second internal electrodes 121 and 122 may have different polarities.

Herein, the boundary between the respective dielectric layers 111 adjacent to each other of the capacitor body 110 may be integrated to the extent that it is difficult to check without using a scanning electron microscope (SEM).

Also, the capacitor body 110 may include an active region 151 and cover regions 112 and 113.

The active region 151 contributes to forming capacitance of the multilayered capacitor 100. For example, the active region 151 is a region where the first and second internal electrodes 121 and 122 are laminated and overlapped with each other along the Z direction.

The cover regions 112 and 113 may be respectively disposed on the first and second surfaces of the active region 151 in the thickness direction (Z direction) as margin portions. The cover regions 112 and 113 may be formed by laminating a single dielectric layer 111 or two or more dielectric layers 111 on an upper surface and a lower surface of the active region 151, respectively.

Also, the capacitor body 110 may further include side cover regions 154 and 155. The side cover regions 154 and 155 may be respectively disposed on the fifth and sixth surfaces of the active region 151 in the width direction (Y direction) as margin portions. These side cover regions 154 and 155 may be formed by applying a conductive paste layer for forming internal electrodes on the surface of the dielectric green sheet only to a portion of the surface of the dielectric green sheet, laminating dielectric green sheets to which a conductive paste layer is not applied, on both side surfaces of the dielectric green sheet, and sintering the same.

The cover regions 112 and 113 and the side cover regions 154 and 155 serve to prevent damages to the first and second internal electrodes 121 and 122 due to physical or chemical stress.

The capacitor body 110 may have, for example, a substantially hexahedral shape.

In the present embodiment, for better understanding and ease of description, both surfaces of the capacitor body 110 facing each other in the thickness direction (Z direction) are defined as first and second surfaces, the surfaces thereof facing each other in the longitudinal direction (X direction) and connected to the first and second surfaces are defined as third and fourth surfaces, and the surfaces connected to the first and second surfaces and also to the third and fourth surfaces and facing each other in the width direction (Y direction) are defined as fifth and sixth surfaces. For example, the first surface, which is a bottom surface, may be a surface facing a mounting direction.

The shape and dimensions of the capacitor body 110 and the number of laminated dielectric layers 111 are not limited to those shown in the drawings of the present embodiment.

For example, the dielectric layer 111 may include a ceramic material with a high dielectric constant. For example, the ceramic material may include a dielectric ceramic including a component such as BaTiO₃, CaTiO₃, SrTiO₃, CaZrO₃, or the like. Further, in addition to these components, auxiliary components such as a Mn compound, an Fe compound, a Cr compound, a Co compound, a Ni compound, and the like may be further included. For example, (Ba₁₋ₓCaₓ)TiO₃, Ba(Ti_{1-y}Ca_{y})O₃, (Ba₁₋ₓCaₓ)(Ti_{1-y}Zr_{y})O₃, Ba(Ti_{1-y}Zr_{y})O₃, or the like in which Ca and Zr are partially dissolved in a BaTiO₃-based dielectric ceramic may be included.

In addition, in the dielectric layer 111, a ceramic additive, an organic solvent, a plasticizer, a binder, a dispersing agent, and the like along with the ceramic powder may be further added. The ceramic additive may be, for example, a transition metal oxide or a transition metal carbide, a rare earth element, magnesium (Mg), aluminum (Al), or the like.

For example, the dielectric layer 111 may have an average thickness of about 0.5 µm to about 10 µm.

The first and second internal electrodes 121 and 122 are electrodes having different polarities, are alternately disposed to face each other in the thickness direction (Z direction) with the dielectric layer 111 in the middle, and one of ends thereof may be exposed through (or extend from or be in contact with) the third or fourth surface of the capacitor body 110.

The first and second internal electrodes 121 and 122 may be electrically insulated by the dielectric layer 111 disposed therebetween.

The ends of the first and second internal electrodes 121 and 122 alternately exposed through the third and fourth surfaces of the capacitor body 110 may be electrically connected to the first and second external electrodes 131 and 132, respectively.

The first and second internal electrodes 121 and 122 may include a conductive metal, for example, a metal such as Ni, Cu, Ag, Pd, or Au, or an alloy thereof, for example, an Ag-Pd alloy.

In addition, the first and second internal electrodes 121 and 122 may include dielectric particles having the same composition as the ceramic material included in the dielectric layer 111.

For example, the first and second internal electrodes 121 and 122 may have an average thickness of about 0.1 µm to about 2 µm.

According to the above configuration, when a predetermined voltage is applied to the first and second external electrodes 131 and 132, charges are accumulated between the first and second internal electrodes 121 and 122. Herein, capacitance of the multilayered capacitor 100 is proportional to an overlapped area of the first and second internal electrodes 121 and 122 laminated along the thickness direction (Z direction) in the active region 151.

However, in the case of the high-voltage multilayered capacitor 100 for an electric device for a vehicle, the capacitor body 110 is formed by laminating the first and second internal electrodes 121 and 122 from several tens to hundreds of layers. In this case, cracks are likely to occur due to piezoelectric phenomenon.

In order to solve this problem, a technique for reducing piezoelectric behavior by inserting a dielectric layer 111 thicker than other dielectric layers 111 as a buffer layer in the middle of the active region 151 of the capacitor body 110 is known. However, such an intermediate buffer layer has a disadvantage in that it is easy to generate cracks at the interface due to the difference in sinterability from the other dielectric layers 111.

Accordingly, the multilayered capacitor 100 according to the present embodiment is a new type of vertical buffer, in which the first internal electrode 121 has a first through-portion 121a. The dielectric of the dielectric layer 111 is disposed on at least a portion of the first through-portion 121a. For example, in the first through-portion 121a, the dielectric of the dielectric layer 111 may be formed through the first internal electrode 121. The first through-portion 121a is disposed in a region where the first internal electrode 121 is not overlapped with the second internal electrode 122.

In addition, the second internal electrode 122 has a second through-portion 122a. The dielectric of the dielectric layer 111 is disposed on at least a portion of the second through-portion 122a. For example, in the second through-portion 122a, the dielectric of the dielectric layer 111 may be formed through the second internal electrode 122. The second through-portion 122a is disposed in a region where the second internal electrode 122 is not overlapped with the first internal electrode 121.

In general, the bonding force between the first and second internal electrodes 121 and 122 and the dielectric layer 111 tends to be lower than the bonding force between the dielectric layers 111, and the first and second through-portions 121a and 122a serve as vertical buffers to strengthen the bonding force between the first and second internal electrodes 121 and 122 and the dielectric layer 111, thereby suppressing distortion due to electro-distortion.

The capacitor body 110 includes an active region 151 in which the first internal electrode 121 and the second internal electrode 122 are overlapped with each other, a first end region 152 in which the first internal electrode 121 is not overlapped with the second internal electrode 122, and a second end region 153 in which the second internal electrode 122 is not overlapped with the first internal electrode 121.

The first end region 152 and the second end region 153 are margin portions and may be respectively disposed on the third and fourth surfaces of the active region 151 in the longitudinal direction (X direction). These first and second end regions 152 and 153 may be formed by, when a dielectric green sheet laminate is manufactured by laminating a dielectric green sheet coated with a conductive paste layer for forming an internal electrode, by laminating the conductive paste layer for forming the first internal electrode and the conductive paste layer for forming the second internal electrode so that at least some regions are not overlapped with each other.

The first through-portion 121a may be disposed in the first end region 152, and the second through-portion 122a may be disposed in the second end region 153. Meanwhile, the first through-portion 121a may not be disposed in the active region 151, and the second through-portion 122a may not be disposed in the active region 151. That is, the first through-portion 121a may be disposed only in the first end region 152, and the second through-portion 122a may be disposed only in the second end region 153.

The first and second through-portions 121a and 122a are formed by not applying a conductive paste to the portion where the first and second through-portions 121a and 122a are to be formed when the conductive paste is applied to the surface of the dielectric green sheet, as will be described later, or alternatively after applying the conductive paste, the conductive paste in the portion where the first and second through-holes 121a and 122a are to be formed is removed using a laser drill or the like. The structure and shape thereof are different from random cut-off portions formed when a portion of the first and second internal electrodes 121 and 122 is cut during sintering due to the difference in the shrinkage start temperature of the conductive paste and the dielectric green sheet.

Also, accordingly, the first through-portion 121a may be disposed only in the first end region 152 and the second through-portion 122a may be disposed only in the second end region 153, but the cut-off portions are randomly formed over the entire regions of the second internal electrodes 121 and 122, and it is difficult to control the formation positions thereof, and in particular, it is more difficult to dispose them only in the first and second end regions 152 and 153.

The first through-portion 121a extends in the thickness direction (Z direction) of the first internal electrode 121, and the dielectrics in the first internal electrode 121 may connect between the two dielectric layers 111 on both sides in the thickness direction (Z direction) of the first internal electrode 121.

In addition, the second through-portion 122a extends in the thickness direction (Z direction) of the second internal electrode 122, and the dielectrics in the second internal electrode 122 may connect between the two dielectric layers 111 on both sides in the thickness direction (Z direction) of the second internal electrode 122.

At this time, the boundaries between the dielectrics in the first and second through-portions 121a and 122a and the dielectric layers 111 connected thereto is integrated to such an extent that it is difficult to check without using a scanning electron microscope (SEM).

The dielectrics in the first through-portions 121a of the first internal electrodes 121 may be substantially connected to each other and may have a pillar shape extending in the thickness direction (Z direction) of the first internal electrode 121. Here, the pillar shape may mean a shape of an even polyhedron having dihedral symmetry, and may have various shapes such as a cylinder, an elliptical pillar, or a polygonal pillar. The fact that the dielectrics are substantially connected to each other means that the first through-portions 121a are arranged in a line in the thickness direction (Z direction), which means that the dielectrics in the first through-portions 121a are continuously or discontinuously connected through the dielectrics in the dielectric layers 111.

In addition, dielectrics in the second through-portions 122a of the second internal electrodes 122 may also be connected to each other to have a pillar shape extending in the thickness direction (Z direction) of the second internal electrode 122.

The first internal electrode 121 may include a plurality of first through-portions 121a. Also, the second internal electrode 122 may include a plurality of second through-portions 122a. For example, FIG. 4 illustrates a case in which the first internal electrode 121 includes three first through-portions 121a and the second internal electrode 122 includes three second through-portions 122a.

The plurality of first through-portions 121a may be spaced apart from each other in the width direction (Y direction) of the first internal electrode 121. Also, the plurality of second through-portions 122a may be spaced apart from each other in the width direction (Y direction) of the second internal electrode 122. Even in this case, the first through-portions 121a may be disposed only in the first end region 152, and the second through-portions 122a may be disposed only in the second end region 153.

In the longitudinal direction (X direction) of the first internal electrode 121, the average length of the first through-portions 121a is smaller than the average length of the first end region 152.

The length of the first through-portion 121a is determined by polishing the multilayered capacitor 100 until any first internal electrodes 121 are exposed in a plane direction substantially perpendicular to the Z direction, and then the maximum diameter of any first through-portion 121a in the cut surface of the exposed first internal electrode 121 may be the length of the first through-portion 121a.

An average length of the first through-portions 121a may be an arithmetic mean of lengths of any three, five, or ten first through-portions 121a respectively in the different first internal electrodes 121, and when one first internal electrode 121 includes the plurality of first through-portions 121a, an arithmetic mean of lengths of a plurality of first through-portions 121a in one first internal electrode 121.

A length of the first end region 152 may be obtained by polishing the multilayered capacitor 100 until the first through-portion 121a and the second through-portion 122a are exposed, randomly selecting any first through-portion 121a from the cut surface thereof exposed in a plane direction substantially perpendicular to the Y direction, and measuring an X direction length of the first internal electrode 121 not overlapped with the adjacent second internal electrode 122.

An average length of the first end regions 152 may be an arithmetic mean of lengths of the first end regions 152 measured in any three, five, or ten different first internal electrodes 121 selected from the exposed cut surface.

In one example, a length or a dimension of an element may be measured by an optical microscope or a scanning electron microscope (SEM). Other methods and/or tools appreciated by one of ordinary skill in the art, even if not described in the present disclosure, may also be used.

In addition, in the longitudinal direction (X direction) of the second internal electrode 122, an average length of the second through-portions 122a is shorter than that of the second end regions 153.

In the longitudinal direction (X direction) of the first and second internal electrodes 121 and 122, the first and second through-portions 121a and 122a may have an average length of about 0.1 mm to about 1.0 mm. When the average length of the first and second through-portions 121a and 122a is less than about 0.1 mm, the dielectrics in the first and second through-portions 121a and 122a may be difficult to manufacture in a pillar shape, and when the average length is greater than about 1.0 mm, the dielectrics may invade the active region 151, deteriorating capacity.

In the longitudinal direction (X direction) of the first and second internal electrodes 121 and 122, an average length of the first and second end regions 152 and 153 may be about 0.1 mm to about 1.0 mm. When the average length of the first and second end regions 152 and 153 is less than 0.1 mm, the dielectrics in the first and second through-portions 121a and 122a may be difficult to manufacture in a pillar shape, and when the average length is greater than about 1.0 mm, the dielectrics may invade the active region 151, deteriorating capacity.

In the width direction (Y direction) of the first internal electrode 121, a sum of the average lengths of the plurality of first through-portions 121a and average distances between the plurality of first through-portions 121a is smaller than the average length of the first end regions 152.

The lengths of the plurality of first through-portion 121a may be obtained by polishing the multilayered capacitor 100 until any first internal electrode 121 is exposed in a plane direction substantially perpendicular to the Z direction and measuring a maximum diameter of each first through-portion 121a from the cut surface of the exposed first internal electrode 121.

The average lengths of the plurality of first through-portions 121a may be an arithmetic mean of lengths of a plurality of first through-portions 121a respectively disposed in any three, five or ten first internal electrodes 121.

The distances between the plurality of first through-portions 121a are obtained by polishing the multilayered capacitor 100 until any first internal electrode 121 is exposed in a plane direction substantially perpendicular to the Z direction and measuring the shortest distance between the plurality of first through-portions 121a on the cut surface of the exposed first internal electrode 121.

The average distances between the plurality of first through-portions 121a may be an arithmetic mean of the distances between a plurality of first through-portions 121a disposed in any three, five, or ten first internal electrodes 121.

In addition, in the width direction (Y direction) of the second internal electrode 122, a sum of the average lengths of the plurality of second through-portions 122a and the average distances of the plurality of second through-portions 122a is smaller than the average length of the second end regions 153.

The first and second external electrodes 131 and 132 may be provided with voltages having different polarities and electrically connected to the exposed portions of the first and second internal electrodes 121 and 122, respectively.

The first and second external electrodes 131 and 132 may respectively include first and second connection portions disposed on the third and fourth surfaces of the capacitor body 110 and respectively connected to the first and second internal electrodes 121 and 122, and also first and second band portions disposed at corners where the first and second surfaces of the capacitor body 110 meet the third and fourth surfaces thereof.

The first and second band portions may extend from the first and second connection portions to portions of the first and second surfaces of the capacitor body 110, respectively. The first and second band portions respectively may further extend from the first and second connection portions to the portions of the fifth and sixth surfaces of the capacitor body 110. The first and second band portions 1312 and 1322 may serve to improve adhesion strength of the first and second external electrodes 131 and 132.

For example, the first and second external electrodes 131 and 132 may respectively include first and second base electrodes in contact with the capacitor body 110, and also first and second terminal electrodes respectively covering the first and second base electrodes.

The first and second base electrodes may include copper (Cu). In addition, the first and second base electrodes may include copper (Cu) as a main component, one or more materials of nickel (Ni), tin (Sn), palladium (Pd), platinum (Pt), gold (Au), silver (Ag), tungsten (W), titanium (Ti), lead (Pb), or an alloy thereof, and glass.

For example, the first and second base electrodes may be formed in a method of dipping the capacitor body 110 in a conductive paste including a conductive metal and glass, printing the conductive paste on the surface of the capacitor body 110 through screen printing, gravure printing, or the like, and applying the conductive paste onto the surface of the capacitor body 110 or transferring a dry film formed by drying the conductive paste onto the capacitor body 110.

The first and second base electrodes are formed of the aforementioned conductive paste and thus may increase density of the first and second external electrodes 131 and 132 due to the glass added thereto as well as maintain sufficient conductivity, and thereby effectively suppress penetration of a plating solution and/or external moisture.

For example, the glass component included in the first and second base electrodes may have a composition in which oxides are mixed, and the metal oxides may be one or more selected from a silicon oxide, a boron oxide, an aluminum oxide, a transition metal oxide, an alkali metal oxide, and an alkali earth metal oxide. The transition metal may be selected from zinc (Zn), titanium (Ti), copper (Cu), vanadium (V), manganese (Mn), iron (Fe), and nickel (Ni), the alkali metal may be at least one selected from lithium (Li), sodium (Na), and potassium (K), and the alkaline earth metal may be at least one selected from magnesium (Mg), calcium (Ca), strontium (Sr), and barium (Ba).

For example, the first and second terminal electrodes may include nickel (Ni) as a main component, and may further include copper (Cu), tin (Sn), palladium (Pd), platinum (Pt), gold (Au), silver (Ag), tungsten (W), titanium (Ti), or lead (Pb) alone or as alloy thereof. The first and second terminal electrodes may improve mountability of the multilayered capacitor 100 on a board, structural reliability, external durability, heat resistance, and equivalent series resistance (ESR).

For example, the first and second terminal electrodes may be formed through plating. The first and second terminal electrodes may be formed through sputtering or electroplating (electric deposition).

Hereinafter, a method of manufacturing the multilayered capacitor 100 according to the present embodiment will be described.

A plurality of dielectric green sheets are prepared. The dielectric green sheet becomes the dielectric layer 111 of the capacitor body 110 after sintering.

The dielectric green sheets are made by mixing ceramic powder, a ceramic additive, an organic solvent, a plasticizer, a binder, a dispersing agent, and the like into a paste and forming the paste into a several µm-thick sheet in a method of doctor blade, screen printing, or the like.

For example, the ceramic powder may be powder of a ceramic material with a high dielectric constant. For example, the ceramic material may include a dielectric ceramic including a component such as BaTiO₃, CaTiO₃, SrTiO₃, or CaZrO₃, and the like. In addition, an auxiliary component such as an Mn compound, an Fe compound, a Cr compound, a Co compound, an Ni compound, and the like may be further included in these components. For example, (Ba_{1- x}Caₓ)TiO₃, Ba(Ti_{1-y}Ca_{y})O₃, (Ba₁₋ₓCaₓ)(Ti_{1-y}Zr_{y})O₃, Ba(Ti_{1-y}Zr_{y})O₃, or the like in which Ca, Zr, etc. are partially dissolved in the BaTio₃-based dielectric ceramic may be included.

The ceramic additive may include, for example, transition metal oxide or transition metal carbide, a rare earth element, magnesium (Mg), aluminum (Al), and the like.

A conductive paste layer is formed on the surface of the dielectric green sheet. The conductive paste layer becomes the first and second internal electrodes 121 and 122 after sintering.

The conductive paste layer may be formed by applying the conductive paste including a conductive metal on the surface of the dielectric green sheet in the method of doctor blade, screen printing, or the like.

The conductive metal may include, for example, a metal such as Ni, Cu, Ag, Pd, or Au, or an alloy thereof, for example, an Ag-Pd alloy.

For example, the first conductive paste layer may be applied onto the surface of the first dielectric green sheet in a first pattern, and the second conductive paste layer may be applied onto the surface of the second dielectric green sheet in a second pattern.

Herein, the first pattern and the second pattern may have, for example, a stripe shape, and when the first and second dielectric green sheets are alternatively laminated, the first pattern and the second pattern may be aligned so that portions of the first and second conductive paste layers are overlapped, while the other portions are not overlapped.

Herein, the conductive paste is applied so that the first and second conductive paste layers may respectively have first and second through-holes. For example, the first and second through-holes may be formed by not applying the conductive paste where the first and second through-holes are supposed to be formed when the conductive paste is applied or applying the conductive paste all onto the surface of the first and second dielectric green sheets and then, removing the conductive paste where the first and second through-holes are supposed to be formed by using a laser drill and the like.

The first and second dielectric green sheets are laminated to manufacture a dielectric green sheet laminate.

Herein, the first and second dielectric green sheets are laminated so that the first and second conductive paste layers may be overlapped, but at least portions of them may not be overlapped.

Specifically, the first and second dielectric green sheets are laminated so that the first through-hole may not be overlapped with the second conductive paste layer. In addition, the first and second dielectric green sheets are laminated so that the second through-hole may not be overlapped with the first conductive paste layer. Accordingly, the capacitor body 110 may include the active region 151 where the first internal electrode 121 is overlapped with the second internal electrode 122, the first end region 152 where the first internal electrode 121 is not overlapped with the second internal electrode 122, and the second end region 153 where the second internal electrode 122 is not overlapped with the first internal electrode 121.

Optionally, the dielectric green sheet laminate is pressed.

In the manufacturing of the dielectric green sheet laminate, the pressing the dielectric green sheet laminate, or both, the first dielectric green sheet, the second dielectric green sheet, or both are penetrated into the first through-hole. In addition, in the manufacturing of the dielectric green sheet laminate, the pressing the dielectric green sheet laminate, or both of them, the first dielectric green sheet, the second dielectric green sheet, or both of them penetrate into the second through-hole.

In the laminating or pressing the dielectric green sheet laminate, pore collapse, binder flow, and particle rearrangement of the dielectric green sheet are in progress, wherein this flow of the dielectric green sheet may be used to fill the first through-hole and the second through-hole of the first and second conductive paste layers with the dielectric green sheet.

Accordingly, the first internal electrode 121 includes the first through-portion 121a formed by the first or second dielectric green sheet penetrating into the first through-hole, and the second internal electrode 122 includes the second through-portion 122a formed by the first or second dielectric green sheet penetrating into the second through-hole.

The first and second through-portions 121a and 122a are formed by sintering the first and second dielectric green sheet after the penetrating and may extend in the thickness direction of the first and second internal electrodes 121 and 122 and thus connect two dielectric layers 111 at both sides in the thickness direction (Z direction) of the first and second internal electrodes 121 and 122.

In addition, a boundary between the dielectric layers 111 connected with the first and second through-portions 121a and 122a may be integrated to such an extent as not to check without a scanning electron microscope (SEM).

Optionally, the dielectric green sheet laminate may be cut so that the first and second conductive paste layers are respectively exposed through both end surfaces.

The dielectric green sheet laminate may be sintered at a high temperature, manufacturing the capacitor body 110.

The first and second external electrodes 131 and 132 are respectively formed on both of the end surfaces where the first and second internal electrodes 121 and 122 of the capacitor body 110 are respectively exposed.

The first and second external electrodes 131 and 132 may be, for example, formed by applying the conductive paste and sintering the same or plating the conductive paste on the capacitor body 110. In addition, the first and second external electrodes 131 and 132 may be formed by applying the conductive paste on the dielectric green sheet laminate and then, sintering the conductive paste along with the dielectric green sheet laminate.

Hereinafter, specific examples are presented. However, the examples described below are only for specifically illustrating or explaining the present disclosure, and the scope of the present disclosure is not limited thereto.

### [Preparation Example: Manufacture of Multilayered Capacitor]

### (Example 1)

A paste including barium titanite (BaTiO₃) powder is applied onto a carrier film and dried, forming a plurality of 1.8 µm-thick dielectric green sheets.

A conductive paste including nickel is applied through screen printing on the dielectric green sheet but not applied where a through-hole is supposed be formed, forming a conductive paste layer with the through-hole.

Herein, the through-hole is shaped to have an average diameter of 0.3 mm and an average length of 1.5 mm, wherein one through-hole is formed for each conductive paste layer.

A dielectric green sheet laminate is manufactured by laminating about 100 dielectric green sheets, so that the through-hole may not be overlapped with the conductive paste layer.

The dielectric green sheet laminate is isostatically pressed at 85 °C under a pressure of 1000 kgf/cm².

The pressed dielectric green sheet laminate is cut into an individual chip and maintained at 230 °C for 60 hours under an air atmosphere to remove a binder.

Subsequently, the obtained laminate chips are sintered at 1200 °C under a lower oxygen partial pressure of 10⁻¹¹ atm to 10⁻¹⁰ atm than a Ni/NiO equilibrium oxygen partial pressure under a reduction atmosphere, so that an internal electrode may not be oxidized.

Then, a multilayered capacitor (L×W×T = 3.2 mm×1.6 mm×1.6 mm) is manufactured through processes of forming an external electrode, plating it, and the like.

### (Example 2)

A multilayered capacitor is manufactured in the same manner as in Example 1 except that three through-holes are formed for each conductive paste layer.

### (Comparative Example 1)

A multilayered capacitor is manufactured in the same manner as in Example 1 except that the through-hole is not formed for each conductive paste layer.

### (Comparative Example 2)

A paste including barium titanite (BaTiO₃) powder is applied onto a carrier film and dried to form a plurality of 1.8 µm-thick dielectric green sheets.

A conductive paste including nickel is applied through screen printing on the dielectric green sheets to form a conductive paste layer.

A dielectric green sheet laminate is manufactured by laminating about 100 dielectric green sheets and inserting a dielectric green sheet with no conductive paste layer thereinto as a buffer layer.

The dielectric green sheet laminate into which the buffer layer is inserted is isostatically pressed at 85 °C under a pressure of 1000 kgf/cm².

The pressed dielectric green sheet laminate is cut into individual chips and maintained under an air atmosphere at 230 °C for 60 hours to remove a binder.

Subsequently, the cut laminate chips are sintered at 1200 °C under a lower oxygen partial pressure of 10⁻¹¹ atm to 10⁻¹⁰ atm than a Ni/NiO equilibrium oxygen partial pressure under a reduction atmosphere, so that an internal electrode may not be oxidized.

Then, a multilayered capacitor (L×W×T = 3.2 mm×1.6 mm×1.6 mm) is manufactured through processes of forming an external electrode, plating it, and the like.

### [Experimental Example 1: Internal Structure of Multilayered Capacitor]

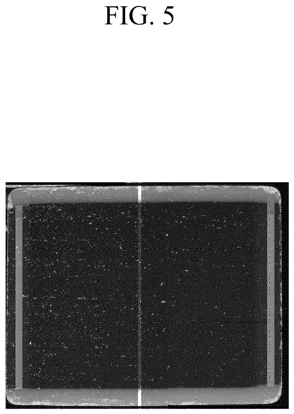

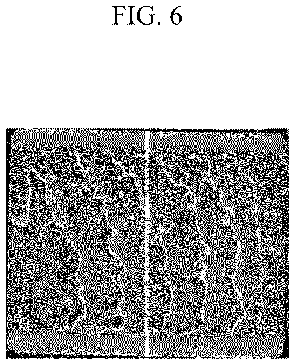

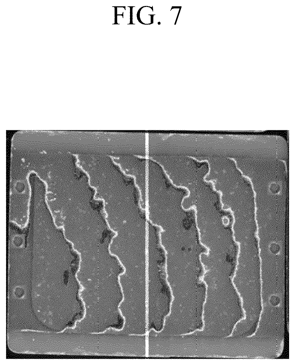

FIG. 5 is a photograph showing a cut surface in the X-Z direction of the multilayered capacitor manufactured in Example 1, FIG. 6 is a photograph showing a cut surface in the X-Y direction of the multilayered capacitor manufactured in Example 1, and FIG. 7 is a photograph showing a cut surface in the X-Y direction of the multilayered capacitor manufactured in Example 2.

Referring to FIGS. 5 to 7, since the dielectric green sheets flow and penetrate into the through-hole on which the conductive paste is not applied during the lamination or the pressing, the internal electrode includes a penetrating portion through which the dielectric layer penetrates in the end region.

In addition, referring to FIG. 5, dielectrics in first through-portions of a plurality of first internal electrodes are connected to each other and have a pillar shape extending in a thickness direction of the first internal electrodes, and dielectrics in second through-portions of a plurality of second internal electrodes have a pillar shape extended in a thickness direction of the second internal electrodes.

### [Experimental Example 2: Measurement of Piezoelectric Curve of Multilayered Capacitor]

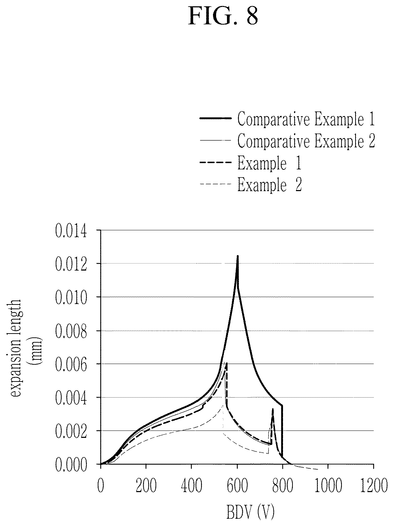

The multilayered capacitors of Examples 1 and 2 and Comparative Examples 1 and 2 are measured with respect to a piezoelectric curve, and the results are shown in FIG. 8.

The piezoelectric curve is a graph showing a longitudinal (X direction) expansion length (mm) of each multilayered capacitor with respect to an insulation break-down voltage (BDV).

The insulation break-down voltage is obtained by applying a voltage from 0 V to 1.00000 V in a sweep method and measuring a voltage when a current becomes 20 mA with a Keithely measuring instrument.

Referring to FIG. 8, the multilayered capacitor of Comparative Example 1 exhibits the greatest degree of expansion in the thickness direction, the multilayered capacitor of Example 1 exhibits expansion in the thickness direction to the same level as the multilayered capacitor of Comparative Example 2, and the multilayered capacitor of Example 2 exhibits the smallest expansion in the thickness direction.

### [Experimental Example 3: Measurement of Insulation Break-down Voltage of Multilayered Capacitors]

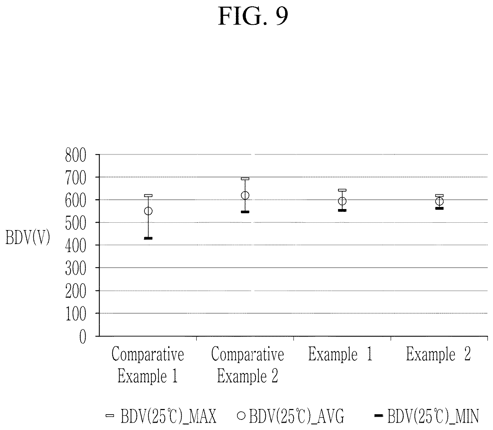

The multilayered capacitors of Examples 1 and 2 and Comparative Examples 1 and 2 are measured with respect to the insulation break-down voltage (BDV), and the results are shown in FIG. 9.

The insulation break-down voltage is obtained by applying a voltage from 0 V to 1.00000 V in a sweep method and measuring a voltage when a current becomes 20 mA with a Keithely measuring instrument.

Referring to FIG. 9, the multilayered capacitors of Comparative Examples 1 and 2 exhibit a large distribution, and Examples 1 and 2 realize an equal or higher insulation break-down voltage than that of the multilayered capacitor of Comparative Example 2 and thus exhibits reduced distribution.

While this disclosure has been described in connection with what is presently considered to be practical example embodiments, it is to be understood that the disclosure is not limited to the disclosed embodiments. On the contrary, it is intended to cover various modifications and equivalent arrangements included within the scope of the appended claims.

## Claims

1. A multilayered capacitor (100), comprising
a capacitor body (110) including a first dielectric layer (111), and a first internal electrode (121) and a second internal electrode (122) with the first dielectric layer interposed therebetween, and
an external electrode (131, 132) on one surface of the capacitor body,
wherein the first internal electrode has a first through-portion (121a) penetrating the first internal electrode and a dielectric of the first dielectric layer is disposed in at least a portion of the first through-portion,
the first through-portion is disposed in a region where the first internal electrode is not overlapped with the second internal electrode,
wherein the capacitor body includes an active region (151) in which the first internal electrode and the second internal electrode are overlapped, and a first end region (152) in which the first internal electrode is not overlapped with the second internal electrode, wherein the first through-portion is disposed only in the first end region,
wherein the first internal electrode includes a plurality of first through-portions,
wherein the plurality of first through-portions are spaced apart from each other in a width direction of the first internal electrode,
wherein the capacitor body includes a plurality of first internal electrodes, and
wherein dielectrics in the first through-portions of the plurality of first internal electrodes are connected to each other to have a pillar shape extending in a stacking direction of the plurality of first internal electrodes.

2. The multilayered capacitor of claim 1, wherein
the second internal electrode has a second through-portion penetrating the second internal electrode and a dielectric of the first dielectric layer is disposed in at least a portion of the second through-portion, and
the second through-portion is disposed in a region where the second internal electrode is not overlapped with the first internal electrode.

3. The multilayered capacitor of claim 2, wherein the capacitor body further includes a second end region in which the second internal electrode is not overlapped with the first internal electrode.

4. The multilayered capacitor of claim 3, wherein
the second through-portion is disposed in the second end region, and
the second through-portion is not disposed in the active region.

5. The multilayered capacitor of claim 2, wherein
the first through-portion extends in a thickness direction of the first internal electrode to connect the first dielectric layer and a second dielectric layer,
the second through-portion extends in a thickness direction of the second internal electrode to connect the first dielectric layer and a third dielectric layer,
the first internal electrode is disposed between the first dielectric layer and the second dielectric layer, and
the second internal electrode is disposed between the first dielectric layer and the third dielectric layer.

6. The multilayered capacitor of claim 2, wherein
the capacitor body includes a plurality of second internal electrodes, and
dielectrics in the second through-portions of the plurality of second internal electrodes are connected to each other to have a pillar shape extending in a stacking direction of the plurality of second internal electrodes.

7. The multilayered capacitor of claim 2, wherein
the second internal electrode includes a plurality of second through-portions, and
the plurality of second through-portions are spaced apart from each other in a width direction of the second internal electrode.

8. The multilayered capacitor of claim 3, wherein
in a longitudinal direction of the first internal electrode, an average length of the first through-portion is smaller than an average length of the first end region, and
in a longitudinal direction of the second internal electrode, an average length of the second through-portion is smaller than an average length of the second end region.

9. The multilayered capacitor of claim 8, wherein
in a width direction of the first internal electrode, a sum of average lengths of the plurality of first through-portions and average distances between the plurality of first through-portions is less than an average length of the first end region, and
in a width direction of the second internal electrode, a sum of the average lengths of the plurality of second through-portions and the average distances between the plurality of second through-portions is less than am average length of the second end region.

10. A method for manufacturing a multilayered capacitor (100), comprising
forming a first conductive paste layer having a first through-hole on a surface of a first dielectric green sheet, and a second conductive paste layer having a second through-hole on a surface of a second dielectric green sheet;
preparing a dielectric green sheet laminate by laminating the first dielectric green sheet and the second dielectric green sheet so that the first through-hole is not overlapped with the second conductive paste layer;
sintering the dielectric green sheet laminate to manufacture a capacitor body (110) including a first through-portion (121a) and a second through-portion (122a); and
forming an external electrode (131, 132) on one surface of the capacitor body,
wherein the first dielectric green sheet, the second dielectric green sheet, or both are penetrated into the first through-hole,
wherein the capacitor body includes an active region (151) in which a first internal electrode (121) and a second internal electrode (122) are overlapped, and a first end region (152) in which the first internal electrode is not overlapped with the second internal electrode,
wherein the first through-portion is disposed only in the first end region,
wherein the first internal electrode includes a plurality of first through-portions,
wherein the plurality of first through-portions are spaced apart from each other in a width direction of the first internal electrode,
wherein the capacitor body includes a plurality of first internal electrodes, and
wherein dielectrics in the first through-portions of the plurality of first internal electrodes are connected to each other to have a pillar shape extending in a stacking direction of the plurality of first internal electrodes.

11. The method of claim 10, wherein
in the manufacturing of the dielectric green sheet laminate, the first dielectric green sheet and the second dielectric green sheet are laminated so that the second through-hole is not overlapped with the first conductive paste layer,
the first dielectric green sheet, the second dielectric green sheet, or both are penetrated into the second through-hole, and
in the manufacturing of the dielectric green sheet laminate, the first dielectric green sheet and the second dielectric green sheet are laminated so that the first conductive paste layer and the second conductive paste layer are at least partially overlapped.

12. The method of claim 10 or 11, further comprising pressing the dielectric green sheet laminate.

13. The method of claim 12, wherein
in the manufacturing of the dielectric green sheet laminate, the pressing of the dielectric green sheet laminate, or both, the first dielectric green sheet, the second dielectric green sheet, or both are penetrated into the first through-hole, and
in the manufacturing of the dielectric green sheet laminate, the pressing of the dielectric green sheet laminate, or both, the first dielectric green sheet, the second dielectric green sheet, or both are penetrated into the second through-hole.

14. The method of one of claims 10 to 13, further comprising cutting the dielectric green sheet laminate so that one end of the first internal electrode is exposed to one side of the dielectric green sheet laminate,
wherein the cutting of the dielectric green sheet laminate includes cutting the dielectric green sheet laminate so that one end of the second internal electrode is exposed to the other side of the dielectric green sheet laminate.

## Patentansprüche

1. Mehrschichtkondensator (100), mit
einem Kondensatorkörper (110) mit einer ersten dielektrischen Schicht (111) und mit einer ersten Innenelektrode (121) und einer zweiten Innenelektrode (122), zwischen denen die erste dielektrische Schicht angeordnet ist, und
einer Außenelektrode (131, 132) auf einer Oberfläche des Kondensatorkörpers,
wobei die erste Innenelektrode einen ersten Durchgangsabschnitt (121a) aufweist, der die erste Innenelektrode durchdringt, und ein Dielektrikum der ersten dielektrischen Schicht in mindestens einem Teil des ersten Durchgangsabschnitts angeordnet ist,
der erste Durchgangsabschnitt in einem Bereich angeordnet ist, in dem die erste Innenelektrode nicht mit der zweiten Innenelektrode überlappt,
wobei der Kondensatorkörper einen aktiven Bereich (151) aufweist, in dem die erste Innenelektrode und die zweite Innenelektrode überlappt sind, und einen ersten Endbereich (152) aufweist, in dem die erste Innenelektrode nicht mit der zweiten Innenelektrode überlappt ist,
wobei der erste Durchgangsabschnitt nur in dem ersten Endbereich angeordnet ist,
wobei die erste Innenelektrode mehrere erste Durchgangsabschnitte aufweist,
wobei die mehreren ersten Durchgangsabschnitte in einer Breitenrichtung der ersten Innenelektrode voneinander beabstandet sind,
wobei der Kondensatorkörper mehrere erste Innenelektroden aufweist, und
wobei Dielektrika in den ersten Durchgangsabschnitten der mehreren ersten Innenelektroden miteinander derart verbunden sind, dass sie eine Säulenform bilden, die sich in einer Stapelrichtung der mehreren ersten Innenelektroden erstreckt.

2. Mehrschichtkondensator nach Anspruch 1, wobei die zweite Innenelektrode einen zweiten Durchgangsabschnitt aufweist, der die zweite Innenelektrode durchdringt, und ein Dielektrikum der ersten Dielektrikumsschicht in mindestens einem Teil des zweiten Durchgangsabschnitts angeordnet ist, und
der zweite Durchgangsabschnitt in einem Bereich angeordnet ist, in dem die zweite Innenelektrode nicht mit der ersten Innenelektrode überlappt.

3. Mehrschichtkondensator nach Anspruch 2, wobei der Kondensatorkörper ferner einen zweiten Endbereich aufweist, in dem die zweite Innenelektrode nicht mit der ersten Innenelektrode überlappt.

4. Mehrschichtkondensator nach Anspruch 3, wobei
der zweite Durchgangsabschnitt in dem zweiten Endbereich angeordnet ist und
der zweite Durchgangsabschnitt nicht in dem aktiven Bereich angeordnet ist.

5. Mehrschichtkondensator nach Anspruch 2, wobei
sich der erste Durchgangsabschnitt in einer Dickenrichtung der ersten Innenelektrode erstreckt, um die erste dielektrische Schicht und eine zweite dielektrische Schicht zu verbinden,
sich der zweite Durchgangsabschnitt in einer Dickenrichtung der zweiten Innenelektrode erstreckt, um die erste dielektrische Schicht und eine dritte dielektrische Schicht zu verbinden,
die erste Innenelektrode zwischen der ersten dielektrischen Schicht und der zweiten dielektrischen Schicht angeordnet ist und
die zweite Innenelektrode zwischen der ersten dielektrischen Schicht und der dritten dielektrischen Schicht angeordnet ist.

6. Mehrschichtkondensator nach Anspruch 2, wobei
der Kondensatorkörper mehrere zweite Innenelektroden aufweist, und
Dielektrika in den zweiten Durchgangsabschnitten der mehreren zweiten Innenelektroden miteinander derart verbunden sind, dass die eine Säulenform bilden, die sich in einer Stapelrichtung der mehreren zweiten Innenelektroden erstreckt.

7. Mehrschichtkondensator nach Anspruch 2, wobei
die zweite Innenelektrode mehrere zweite Durchgangsabschnitte aufweist und
die mehreren zweiten Durchgangsabschnitte in einer Breitenrichtung der zweiten Innenelektrode voneinander beabstandet sind.

8. Mehrschichtkondensator nach Anspruch 3, wobei
in Längsrichtung der ersten Innenelektrode eine durchschnittliche Länge des ersten Durchgangsabschnitts kleiner ist als eine durchschnittliche Länge des ersten Endbereichs, und
in Längsrichtung der zweiten Innenelektrode eine durchschnittliche Länge des zweiten Durchgangsabschnitts kleiner ist als eine durchschnittliche Länge des zweiten Endbereichs.

9. Mehrschichtkondensator nach Anspruch 8, wobei
in einer Breitenrichtung der ersten Innenelektrode eine Summe der durchschnittlichen Längen der mehreren ersten Durchgangsabschnitte und der durchschnittlichen Abstände zwischen den mehreren ersten Durchgangsabschnitten kleiner ist als eine durchschnittliche Länge des ersten Endbereichs, und
in einer Breitenrichtung der zweiten Innenelektrode die Summe der durchschnittlichen Längen der mehreren zweiten Durchgangsabschnitte und der durchschnittlichen Abstände zwischen den mehreren zweiten Durchgangsabschnitten kleiner ist als die durchschnittliche Länge des zweiten Endbereichs.

10. Verfahren zur Herstellung eines Mehrschichtkondensators (100), mit
Bilden einer ersten leitfähigen Pastenschicht mit einem ersten Durchgangsloch auf einer Oberfläche einer ersten dielektrischen Rohschicht und einer zweiten leitfähigen Pastenschicht mit einem zweiten Durchgangsloch auf einer Oberfläche einer zweiten dielektrischen Rohschicht;
Herstellen eines dielektrischen Rohschichtlaminats durch Laminieren der ersten dielektrischen Rohschicht und der zweiten dielektrischen Rohschicht, so dass das erste Durchgangsloch nicht mit der zweiten leitfähigen Pastenschicht überlappt;
Sintern des dielektrischen Rohschichtlaminats, um einen Kondensatorkörper (110) herzustellen, der einen ersten Durchgangsabschnitt (121a) und einen zweiten Durchgangsabschnitt (122a) aufweist; und
Bilden einer Außenelektrode (131, 132) auf einer Oberfläche des Kondensatorkörpers, wobei die erste dielektrische Rohschicht und/oder die zweite dielektrische Rohschicht in das erste Durchgangsloch eindringen,
wobei der Kondensatorkörper einen aktiven Bereich (151) aufweist, in dem eine erste Innenelektrode (121) und eine zweite Innenelektrode (122) überlappen, und einen ersten Endbereich (152) aufweist, in dem die erste Innenelektrode nicht mit der zweiten Innenelektrode überlappt,
wobei der erste Durchgangsabschnitt nur in dem ersten Endbereich angeordnet ist,
wobei die erste Innenelektrode mehrere erste Durchgangsabschnitte aufweist,
wobei die mehreren ersten Durchgangsabschnitte in einer Breitenrichtung der ersten Innenelektrode voneinander beabstandet sind,
wobei der Kondensatorkörper mehrere erste Innenelektroden aufweist, und
wobei Dielektrika in den ersten Durchgangsabschnitten der mehreren ersten Innenelektroden miteinander derart verbunden sind, dass die eine Säulenform bilden, die sich in einer Stapelrichtung der mehreren ersten Innenelektroden erstreckt.

11. Verfahren nach Anspruch 10, wobei
bei der Herstellung des dielektrischen Rohschichtlaminats die erste dielektrische Rohschicht und die zweite dielektrische Rohschicht so laminiert werden, dass das zweite Durchgangsloch nicht mit der ersten leitfähigen Pastenschicht überlappt,
die erste dielektrische Rohschicht und/oder die zweite dielektrische Rohschicht in das zweite Durchgangsloch eindringen, und
bei der Herstellung des dielektrischen Rohschichtlaminats die erste dielektrische Rohschicht und die zweite dielektrische Rohschicht so laminiert werden, dass die erste leitfähige Pastenschicht und die zweite leitfähige Pastenschicht zumindest teilweise überlappen.

12. Verfahren nach Anspruch 10 oder 11, das ferner Pressen des dielektrischen Rohschichtlaminats umfasst.

13. Verfahren nach Anspruch 12, wobei
beim Bilden des dielektrischen Rohschichtlaminats und/oder beim Pressen des dielektrischen Rohschichtlaminats die erste dielektrische Rohschicht und/oder die zweite dielektrische Rohschicht in das erste Durchgangsloch eindringen, und
beim Bilden des dielektrischen Rohschichtlaminats und/oder beim Pressen des dielektrischen Rohschichtlaminats, die erste dielektrische Rohschicht und/oder die zweite dielektrische Rohschicht in das zweite Durchgangsloch eindringen.

14. Verfahren nach einem der Ansprüche 10 bis 13, das ferner umfasst: Schneiden des dielektrischen Rohschichtlaminats derart, dass ein Ende der ersten Innenelektrode auf einer Seite des dielektrischen Rohschichtlaminats freiliegt,
wobei das Schneiden des dielektrischen Rohschichtlaminats umfasst: Schneiden des dielektrischen Rohschichtlaminats derart, dass ein Ende der zweiten Innenelektrode auf der anderen Seite des dielektrischen Rohschichtlaminats freiliegt.

## Revendications

1. Condensateur multicouche (100), comprenant
un corps de condensateur (110) incluant une première couche diélectrique (111), ainsi qu'une première électrode interne (121) et une deuxième électrode interne (122) entre lesquelles est interposée la première couche diélectrique, et
une électrode externe (131, 132) sur une surface du corps de condensateur,
dans lequel la première électrode interne comporte une première portion traversante (121a) qui pénètre la première électrode interne, et un diélectrique de la première couche diélectrique est disposé dans au moins une portion de la première portion traversante,
dans lequel la première portion traversante est disposée dans une région où la première électrode interne et la deuxième électrode interne ne se chevauchent pas,
dans lequel le corps de condensateur inclut une région active (151) dans laquelle la première électrode interne et la deuxième électrode interne se chevauchent, et une première région d'extrémité (152) dans laquelle la première électrode interne et la deuxième électrode interne ne se chevauchent pas,
dans lequel la première portion traversante est disposée uniquement dans la première région d'extrémité,
dans lequel la première électrode interne inclut une pluralité de premières portions traversantes,
dans lequel les portions de la pluralité de premières portions traversantes sont espacées les unes des autres en direction de la largeur de la première électrode interne,
dans lequel le corps de condensateur inclut une pluralité de premières électrodes internes, et
dans lequel les diélectriques dans les premières portions traversantes de la pluralité de premières électrodes internes sont connectés entre eux pour présenter une forme de pilier qui s'étend dans une direction d'empilement de la pluralité de premières électrodes internes.

2. Condensateur multicouche selon la revendication 1, dans lequel
la deuxième électrode interne comporte une deuxième portion traversante qui pénètre la deuxième électrode interne, et un diélectrique de la première couche diélectrique est disposé dans au moins une portion de la deuxième portion traversante, et
la deuxième portion traversante est disposée dans une région où la deuxième électrode interne et la première électrode interne ne se chevauchent pas.

3. Condensateur multicouche selon la revendication 2, dans lequel le corps de condensateur inclut en outre une deuxième région d'extrémité dans laquelle la deuxième électrode interne et la première électrode interne ne se chevauchent pas.

4. Condensateur multicouche selon la revendication 3, dans lequel
la deuxième portion traversante est disposée dans la deuxième région d'extrémité, et
la deuxième portion traversante n'est pas disposée dans la région active.

5. Condensateur multicouche selon la revendication 2, dans lequel
la première portion traversante s'étend en direction de l'épaisseur de la première électrode interne pour connecter la première couche diélectrique et une deuxième couche diélectrique,
la deuxième portion traversante s'étend en direction de l'épaisseur de la deuxième électrode interne pour connecter la première couche diélectrique et une troisième couche diélectrique,
la première électrode interne est disposée entre la première couche diélectrique et la deuxième couche diélectrique, et
la deuxième électrode interne est disposée entre la première couche diélectrique et la troisième couche diélectrique.

6. Condensateur multicouche selon la revendication 2, dans lequel
le corps de condensateur inclut une pluralité de deuxièmes électrodes internes, et
les diélectriques des deuxièmes portions traversantes de la pluralité de deuxièmes électrodes internes sont connectés entre eux pour présenter une structure en forme de pilier qui s'étend dans une direction d'empilement de la pluralité de deuxièmes électrodes internes.

7. Condensateur multicouche selon la revendication 2, dans lequel
la deuxième électrode interne inclut une pluralité de deuxièmes portions traversantes, et
les portions de la pluralité de deuxièmes portions traversantes sont espacées les unes des autres en direction de la largeur de la deuxième électrode interne.

8. Condensateur multicouche selon la revendication 3, dans lequel
en direction longitudinale de la première électrode interne, la longueur moyenne de la première portion traversante est inférieure à la longueur moyenne de la première région d'extrémité, et
en direction longitudinale de la deuxième électrode interne, la longueur moyenne de la deuxième portion traversante est inférieure à la longueur moyenne de la deuxième région d'extrémité.

9. Condensateur multicouche selon la revendication 8, dans lequel
en direction de la largeur de la première électrode interne, la somme des longueurs moyennes de la pluralité de premières portions traversantes et des distances moyennes entre la pluralité de premières portions traversantes est inférieure à la longueur moyenne de la première région d'extrémité, et
en direction de la largeur de la deuxième électrode interne, la somme des longueurs moyennes de la pluralité de deuxièmes portions traversantes et des distances moyennes entre la pluralité de deuxièmes portions traversantes est inférieure à la longueur moyenne de la deuxième région d'extrémité.

10. Procédé de fabrication d'un condensateur multicouche (100), comprenant
la formation d'une première couche de pâte conductrice comportant un premier trou traversant sur la surface d'une première feuille verte diélectrique, et d'une deuxième couche de pâte conductrice comportant un deuxième trou traversant sur la surface d'une deuxième feuille verte diélectrique ;
la préparation d'un stratifié de feuille verte diélectrique en stratifiant la première feuille verte diélectrique et la deuxième feuille verte diélectrique de sorte que le premier trou traversant ne chevauche pas la deuxième couche de pâte conductrice ;
le frittage du stratifié de feuille verte diélectrique pour fabriquer un corps de condensateur (110) incluant une première portion traversante (121a) et une deuxième portion traversante (122a) ; et
la formation d'une électrode externe (131, 132) sur une surface du corps de condensateur,
dans lequel la première feuille verte diélectrique et/ou la deuxième feuille verte diélectrique sont pénétrées via le premier trou traversant,
dans lequel le corps de condensateur inclut une région active (151) dans laquelle une première électrode interne (121) et une deuxième électrode interne (122) se chevauchent, et une première région d'extrémité (152) dans laquelle la première électrode interne et la deuxième électrode interne ne se chevauchent pas,
dans lequel la première portion traversante est disposée uniquement dans la première région d'extrémité,
dans lequel la première électrode interne inclut une pluralité de premières portions traversantes,
dans lequel les portions de la pluralité de premières portions traversantes sont espacées les unes des autres en direction de la largeur de la première électrode interne,
dans lequel le corps de condensateur inclut une pluralité de premières électrodes internes, et
dans lequel les diélectriques dans les premières portions traversantes de la pluralité de premières électrodes internes sont connectés entre eux pour présenter une forme de pilier qui s'étend dans une direction d'empilement de la pluralité de premières électrodes internes.

11. Procédé selon la revendication 10, dans lequel
lors de la fabrication du stratifié de feuille verte diélectrique, la première feuille verte diélectrique et la deuxième feuille verte diélectrique sont stratifiées de sorte que le deuxième trou traversant et la première couche de pâte conductrice ne se chevauchent pas,
la première feuille verte diélectrique et/ou la deuxième feuille verte diélectrique sont pénétrées via le deuxième trou traversant, et
lors de la fabrication du stratifié de feuille verte diélectrique, la première feuille verte diélectrique et la deuxième feuille verte diélectrique sont stratifiées de sorte que la première couche de pâte conductrice et la deuxième couche de pâte conductrice se chevauchent au moins partiellement.

12. Procédé selon la revendication 10 ou 11, comprenant en outre le pressage du stratifié de feuille verte diélectrique.

13. Procédé selon la revendication 12, dans lequel
lors de la fabrication du stratifié de feuille verte diélectrique et/ou du pressage du stratifié de feuille verte diélectrique, la première feuille verte diélectrique et/ou la deuxième feuille verte diélectrique sont pénétrées via le premier trou traversant, et
lors de la fabrication du stratifié de feuille verte diélectrique et/ou du pressage du stratifié de feuille verte diélectrique, la première feuille verte diélectrique et/ou la deuxième feuille verte diélectrique sont pénétrées via le deuxième trou traversant.

14. Procédé selon l'une des revendications 10 à 13, comprenant en outre la découpe du stratifié de feuille verte diélectrique de sorte qu'une extrémité de la première électrode interne soit exposée sur un côté du stratifié de feuille verte diélectrique,
dans lequel la découpe du stratifié de feuille verte diélectrique inclut la découpe du stratifié de feuille verte diélectrique de sorte qu'une extrémité de la deuxième électrode interne soit exposée sur l'autre côté du stratifié de feuille verte diélectrique.
